**Europäisches Patentamt**

(19) **European Patent Office**

**Office européen des brevets**

(11) Publication number: **0 039 665**
**B1**

(12) **EUROPEAN PATENT SPECIFICATION**

(45) Date of publication of the patent specification: **17.08.83**

(21) Application number: **81850048.0**

(22) Date of filing: **19.03.81**

(51) Int. Cl.³: **G 06 F 11/30**

(54) A method and apparatus for tracing a sequence comprising a series of transfers of binary message words.

(30) Priority: **24.03.80 SE 8002239**

(43) Date of publication of application:
**11.11.81 Bulletin 81/45**

(45) Publication of the grant of the patent:
**17.08.83 Bulletin 83/33**

(84) Designated Contracting States:
**BE DE FR GB NL**

(56) References cited:
**FR-A-2 258 668**
**US-A-3 659 272**
**IEEE TRANSACTIONS ON COMPUTERS, col.
C-22, no. 7, July 1973, pages 644—656, New York,
US, FEUSTEL: »On the advantages of tagged
architecture«**
**IBM TECHNICAL DISCLOSURE BULLETIN,
vol. 15, no. 4, September 1972, New York, US,
SAKALAY: »Program event recording«, pages
1332—1333**

(73) Proprietor: **TELEFONAKTIEBOLAGET L M ERICSSON,
S-126 25 STOCKHOLM (SE)**

(72) Inventor: **Edsbäcker, Carl Peter Thomas,
Vasavägen 212 A, S-191 76 Sollentuna (SE)**

(74) Representative: **Szemere, Fredrik et al,
Telefonaktiebolaget L M Ericsson Patent Department,
S-126 25 Stockholm (SE)**

A method and apparatus for tracing a sequence comprising a series of transfers of binary message words

### Technical field

The invention relates to a method of tracing at least one calculation sequence during continuing operation in which there is a series of transfers of binary message words between a plurality of electric circuits, which form from the message word obtained a new message word for transmission to a subsequent circuit, e.g. data transmission between a plurality of processors. The invention also relates to an apparatus for carrying out the method.

### Background art

Different procedures can be utilized to trace errors in sequences of the kind mentioned above. One possibility is separately to run the sequence it is desired to examine, so that the sequences in the equipment are stopped during this time, all transmitted values are than registered and errors discovered by writing out and examining all steps in the examined sequence. In this case, the examination result can however be affected by all the other sequences normally progressing parallel thereto being inhibited during the test sequence, so that, should an error in the examined sequence originate from the action of another sequence progressing parallel to it, it may happen that the check does not give any result.

Another possibility is shown in IBM Technical Disclosure Bulletin, Vol. 15, No. 4, Sept. 1972, pp. 1332 – 1333.

Another possibility is to register and write out all sequences, the written-out list being visually examined. This method is very time-consuming, however.

IEEE Transactions on Computers, Vol. C-22, no. 7, July 1973, pp 644 – 656, esp. chapter IVD, and US-A-3 659 272 show the use of tags to mark data for debugging.

### Disclosure of invention

The object of the invention is to eliminate said disadvantages and to provide a method and apparatus which facilitate examination as to whether a sequence of the kind above is correct, only steps in the examined sequence being registered without making necessary the inhibition of the sequences progressing parallel thereto during the period. The invention is characterized as disclosed in the claims.

### Brief description of drawing

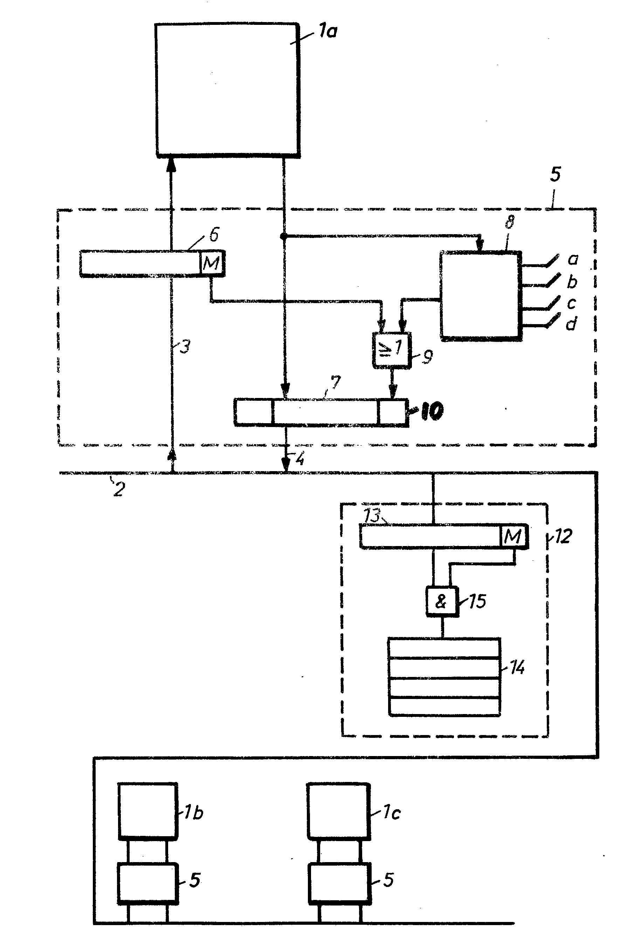

The invention is described in more detail below with the aid of an embodiment, while referring to the accompanying drawing illustrating an apparatus for carrying out the method in accordance with the invention.

### Best mode for carrying out the invention

The figure illustrates data processing equipment comprising a plurality of processors 1a, 1b, 1c, each of which is in communication with the others via its input 3 and output 4 in a common bus system 2. Each processor in the equipment is provided with a marking device 5 which is identical for all processors, but is only shown in detail for the processor 1a. In order to simplify the description, the following limitations are made:

— a processor deals with only one task at a time
— a processor and associated marking device 5 only senses the input 3 when the processor is free.

The marking device 5 comprises an output register 7 connected into the outgoing line and an input register 6, connected into the incoming line. Both registers are of such type that further to the bit positions for the message word which is to be passed on, they also contain at least one further bit position for one or more binary characters which are to be added to the message word, as explained hereinafter.

According to the example, it is desired to add a binary characteristic or marking bit to each word associated with a sequence it is desired to trace. Should only one sequence be traced at the same time, it is sufficient to add one binary marking bit e.g. 1. On the other hand, if it is necessary to trace several sequences simultaneously, the number of marking bits may be larger for enabling marking a plurality of sequences simultaneously in this way.

According to the example, four different variations of sequence can be identified. This is done such that in the example two bits are sensed in the word fed out from the output register 7. This enables identification of four different sequences. The identification can naturally be extended so that a larger part of, or the whole message between the processors is utilized for identifying a greater number of sequences. The bits necessary for sensing e.g., the two first bits, are taken parallel to the output register to an identifier circuit 8 which, if there is conformity between one of the four sequences selectable via contacts a + d, sends a binary 1 on its output, and for lack of conformity sends a binary zero on its output. Upon conformity, a logical 1 is transferred to a marking register 10 or a bit position intended for this value in the output register 7 via OR-gate 9.

A memory device 12 is arranged on the transfer bus 2, and receives all message words transferred between all units connected to the bus, and together with their marking bits writes these in a register 13. If the message word is provided with a marking bit or bits, an AND-gate 15 is opened and the word written into a memory 14, so that all words provided with a marking bit can be read out at the termination of the sequence and checked as to whether they are correct or not.

In receiving a word provided with a marking bit in a processor and feeding out the word obtained by processing the obtained word the latter must be provided with the same marking bit. This is done by the incoming word being written into the incoming register 6 where a special bit position is kept for a logical 1 functioning as a marking bit. From this position a signal is transferred to the output register 7 via the OR-gate 9, so that the latter is activated, and in the same way as for the original marking adds a logical 1 to the word inserted in the output register 7, which is now a completely different word from that obtained at the input. During the continued sequence, the new word is registered in the memory device 12 when passing through the bus. When the whole sequence is terminated, the successively written-in words are read out and it will be easy to verify the tested sequence and determine which words are incorrect. When the processor is free for new tasks, the entire input register 6 is first reset to zero, whereafter the processor once again begins to pick up input signals on the bus.

### Claims

1. A method of tracing at least one sequence of calculations during operation in progress, even of several sequences are simultaneously carried out, in which each calculation gives a partial result, and the partial results taken together give an intended final result, and in which this sequence of calculations imply a series of transfers of binary information words via a common bus (2) between a plurality of electrical operational units (1a, 1b, 1c), which form a new information word from the received information word for transfer to a subsequent circuit, e.g. transfer of information between a plurality of processors, characterized in that at the start of a sequence the first information word is provided with a marking bit or bits, in that the marking bit or bits is or are read and stored at each operational unit and inserted in the new information word obtained owing to the information word fed in, in that each information word is sensed on being transferred on the common bus (2), and the information word containing a marking bit or bits is copied in a memory in the order of appearance, and in that all information words provided with a given marking bit or bits are read out from the memory for examination as to whether the sequence provided with the marking bit or bits was correct.

2. Apparatus for carrying out the method according to claim 1, characterized in that each operational unit (1a, 1b, 1c), between which transfer of information words takes place is provided with a marking device (5) comprising an output register (7) and an identifier circuit (8) sensing given digit positions in the register for determining that the word is associated with a sequence which is to be examined, said identifier circuit activating a marking register (10) for furnishing a word written in the register (7) with at least one marking bit (M) and that the marking device further comprises an input register (6), in which the presence of at least one marking bit in a registered word activates the marking register (10), so that, by initiating from the word fed in, the word occuring in the output register is supplemented by said marking bit or bits, there being a memory device (12) coupled to the bus between said operational units, said memory device (12) having identifying means (13, 15) for identifying words furnished with marking bits, and memory means (14) for registering the marked words in their order of appearance for subsequent read-outs.

### Patentansprüche

1. Verfahren zur Rückverfolgung oder zum Aufsuchen wenigstens einer Folge von Rechnungen während des laufenden Betriebes, auch wenn mehrere Folgen gleichzeitig ablaufen, wobei jede Rechnung ein Teilergebnis hervorbringt und die Teilergebnisse für ein angestrebtes Endergebnis zusammengenommen werden und bei dem diese Folge von Rechnungen eine Kette von Übertragungen von Binärinformationsworten über eine gemeinsame Sammelschiene (2) zwischen mehreren elektrischen Operationseinheiten (1a, 1b, 1c) erfordert, die ein neues Informationswort aus den empfangenen Informationsworten bilden, das einer anschließenden Schaltung zugeführt wird, z. B. die Übertragung von Information zwischen mehreren Prozessoren, dadurch gekennzeichnet, daß am Beginn einer Folge das erste Informationswort mit einem Markierungsbit oder mit -bits versehen wird, daß das Markierungsbit oder die -bits bei jeder Operationseinheit ausgelesen und gespeichert und in das neue Informationswort eingefügt wird, das sich aufgrund der Zuführung des Informationswortes ergibt, daß jedes Informationswort bei der Übertragung über die Sammelschiene (2) aufgespürt und das mit einem Markierungsbit oder -bits versehene Informationswort in einem Speicher in der Reihenfolge seines Auftretens kopiert wird und daß sämtliche Informationswörter, die mit einem bestimmten Markierungsbit oder mit Bits versehen sind, für die Prüfung, ob die mit dem Markierungsbit oder den Bits versehene Folge korrekt war, ausgelesen werden.

2. Vorrichtung zur Durchführung des Verfahrens nach Anspruch 1, dadurch gekennzeichnet, daß jede Operationseinheit (1a, 1b, 1c), zwischen der Informationswörter übertragen werden, mit einer Markierungsvorrichtung (5) versehen ist, zu der ein Ausgangsregister (7) und eine Erkennungsschaltung (8) gehört, die bestimmte Stellenpositionen in dem Register aufspürt, um festzustellen, daß das Wort von einer zugehörigen Folge begleitet ist, die zu prüfen ist, wobei die Erkennungsschaltung ein Markierungsregister (10) aktiviert, um ein in das Register (7) eingeschriebenes Wort mit wenigstens einem Markierungsbit (m) auszustatten, und daß die Markierungsvorrichtung ferner ein Eingangsregister aufweist, in dem das Auftreten von wenigstens einem Markierungsbit in einem registrierten Wort das Markierungsregister (10) so aktiviert, daß, ausgelöst durch das eingegebene Wort, das im Ausgangsregister erscheinende Wort um ein Markierungsbit oder um Bits ergänzt wird, wobei eine Speichervorrichtung (12) mit der Sammelschiene zwischen den Operationseinheiten gekoppelt ist, die Erkennungseinrichtungen (13, 15) zum Erkennen von mit Markierungsbits ausgestatteten Worten und Speichereinrichtungen (14) zum Einspeichern der markierten Worte in der Reihenfolge ihres Auftretens für anschließende Auslesevorgänge aufweist.

**Revendications**

1. Procédé pour analyser au moins une séquence de calculs pendant le déroulement d'une opération même si plusieurs séquences sont effectuées simultanément, dans lequel chaque calcul donne un résultat partiel, et les résultats partiels pris ensemble donnent un résultat final prévu, et dans lequel cette séquence de calculs implique une série de transferts de mots d'informations binaires par l'intermédiaire d'un bus commun (2) entre plusieurs unités opérationnelles électriques (1a, 1b, 1c), qui forment, à partir du mot d'information reçu un nouveau mot d'information à transférer à un circuit suivant, par exemple un transfert d'information entre plusieurs processeurs, caractérisé en ce que, au début d'une séquence, le premier mot d'information est accompagné d'un ou plusieurs bits de marquage, en ce que le ou les bits de marquage est ou sont lus et enregistrés dans chaque unité opérationnelle et insérés dans le nouveau mot d'information obtenu à partir du mot d'information introduit, en ce que chaque mot d'information est détecté lors de son transfert sur le bus commun (2), et le mot d'information contenant un ou plusieurs bits de marquage est introduit dans une mémoire dans l'ordre d'apparition, et en ce que tous les mots d'information accompagnés d'un ou plusieurs bits de marquage donnés sont extraits de la mémoire pour examen afin de déterminer si la séquence accompagnée du ou des bits de marquage était correcte.

2. Appareil pour la mise en oeuvre du procédé selon la revendication 1, caractérisé en ce que les unités opérationnelles (1a, 1b, 1c), entre lesquelles un transfert de mot d'information a lieu, sont équipées chacune d'un dispositif de marquage (5) comprenant un registre de sortie (7) et un circuit identificateur (8) détectant des positions de chiffres données dans le registre afin de déterminer que le mot est associé à une séquence à examiner, ledit circuit identificateur activant un registre de marquage (10) pour fournir à un mot écrit dans le registre (7) au moins un bit de marquage (M) et en ce que le dispositif de marquage comprend en outre un registre d'entrée (6), dans lequel la présence d'au moins un bit de marquage dans un mot enregistré active le registre de marquage (10), de manière que, en commençant à partir du mot introduit, le mot apparaissant dans le registre de sortie soit complété par ledit ou lesdits bits de marquage, un dispositif à mémoire (12) étant couplé au bus entre lesdites unités opérationnelles, ledit dispositif (12) de mémoire ayant des moyens d'identification (13, 15) destinés à identifier des mots accompagnés de bits de marquage, et des moyens de mémoire (14) destinés à enregistrer les mots marqués dans leur ordre d'apparition pour des lectures suivantes.